# EUROPEAN PATENT APPLICATION

(11) **EP 3 879 369 A1**
(43) Date of publication of application: **15.09.2021**
(21) Application number: 21161286.6
(22) Date of filing: 08.03.2021
(51) Int. Cl.: G05B 19/418, G05B 23/02

(54) **PIPING AND INSTRUMENTATION DIAGRAM EXTRACTION TO HUMAN-MACHINE INTERFACE DISPLAYS**

(30) Priority: 09.03.2020 US 202016813421
(71) Applicant: Rockwell Automation Technologies, Inc., Mayfield Heights, OH 44124 (US)
(72) Inventor: MABOTE, Itumeleng, Mayfield Heights, OH 44124 (US)
(74) Representative: Grünecker Patent- und Rechtsanwälte PartG mbB

(57) **Abstract**

Techniques to facilitate automatic importation and placement of display objects on human-machine interface (HMT) displays are disclosed herein. In at least one implementation, a selection of a user-defined area is received that identifies at least a portion of a piping and instrumentation diagram (P&ID) associated with an industrial automation environment. The P&ID is analyzed to identify objects within the user-defined area of the P&ID and determine location data for the objects identified relative to the user-defined area. HMI objects are generated on an HMI display by mapping the objects identified within the user-defined area of the P&ID onto the HMI display based on the user-defined area of the P&ID and the location data for the objects identified relative to the user-defined area.

## Description

### TECHNICAL FIELD

Aspects of the disclosure are related to computing hardware and software technology.

### TECHNICAL BACKGROUND

Various manufacturing processes and other industrial operations occur in industrial automation environments. Some examples of industrial automation environments include industrial mining operations, automobile manufacturing factories, food processing plants, oil drilling operations, microprocessor fabrication facilities, and other types of industrial enterprises. Industrial automation environments typically involve many complex systems and processes which are often spread out over various disparate locations.

Industrial automation environments utilize various machines during the industrial manufacturing process, such as drives, pumps, motors, compressors, valves, robots, and other mechanical devices. These devices have various moving parts and other components that are driven by instructions received from industrial controller systems. Machine builders, solution providers, and other content creators typically produce the control logic needed to run on these industrial controller systems in order to control the mechanical functions of the devices and carry out their intended functions.

Industrial environments also commonly include a human-machine interface (HMI). An HMI typically receives and processes the status data from the machines to generate various graphical displays, which may indicate the current and historical performance of the machines. In traditional implementations, the HMI may also provide a mechanism for an operator to send control instructions to a control system that controls the machines. For example, an operator might use the HMI to direct the control system to update drive parameters, turn on a pump, speed-up a motor, or stop a robot.

### OVERVIEW

Techniques to facilitate automatic importation and placement of display objects on human-machine interface (HMI) displays are disclosed herein. In at least one implementation, a selection of a user-defined area is received that identifies at least a portion of a piping and instrumentation diagram (P&ID) associated with an industrial automation environment. The P&ID is analyzed to identify objects within the user-defined area of the P&ID and determine location data for the objects identified relative to the user-defined area. HMI objects are generated on an HMI display by mapping the objects identified within the user-defined area of the P&ID onto the HMI display based on the user-defined area of the P&ID and the location data for the objects identified relative to the user-defined area.

This Overview is provided to introduce a selection of concepts in a simplified form that are further described below in the Detailed Description. It should be understood that this Overview is not intended to identify key features or essential features of the claimed subject matter, nor is it intended to be used to limit the scope of the claimed subject matter.

### BRIEF DESCRIPTION OF THE DRAWINGS

Many aspects of the disclosure can be better understood with reference to the following drawings. While several implementations are described in connection with these drawings, the disclosure is not limited to the implementations disclosed herein. On the contrary, the intent is to cover all alternatives, modifications, and equivalents.
Figure 1 is a block diagram that illustrates a piping and instrumentation diagram (P&ID) associated with an industrial automation environment in an exemplary implementation.
Figure 2 illustrates an equipment list associated with an industrial automation environment in an exemplary implementation.
Figure 3 is a block diagram that illustrates a P&ID associated with an industrial automation environment in an exemplary implementation.
Figure 4 is a block diagram that illustrates an exemplary graphical display of a human-machine interface (HMI) executing on a computing system in an exemplary implementation.
Figure 5 is a flow diagram that illustrates an operation of a computing system in an exemplary implementation.
Figure 6 is a block diagram that illustrates an operational scenario involving a computing system in an industrial automation environment in an exemplary implementation.
Figure 7 is a block diagram that illustrates a computing system in an exemplary implementation.

### DETAILED DESCRIPTION

The following description and associated figures teach the best mode of the invention. For the purpose of teaching inventive principles, some conventional aspects of the best mode may be simplified or omitted. The following claims specify the scope of the invention. Note that some aspects of the best mode may not fall within the scope of the invention as specified by the claims. Thus, those skilled in the art will appreciate variations from the best mode that fall within the scope of the invention. Those skilled in the art will appreciate that the features described below can be combined in various ways to form multiple variations of the invention. As a result, the invention is not limited to the specific examples described below, but only by the claims and their equivalents.

A piping and instrumentation diagram (P&ID) provides a detailed graphical overview of an industrial automation environment, such as a manufacturing factory, processing plant, fabrication facility, and other types of industrial enterprises. Generally, a P&ID comprises a schematic drawing that illustrates the process flow and industrial equipment along with the instrumentation and control devices. A P&ID typically includes mechanical equipment such as pressure vessels, tanks, pumps, motors, compressors, drives, valves and other industrial assets, process pipelines and flow directions, process control and status monitoring instrumentation, and other objects employed in an industrial automation process.

Engineers often work to develop customized HMI displays to monitor and control specific industrial operations. Generally, when creating HMI displays, an engineer will refer to the P&ID to get an overview of the plant and see how the various industrial equipment and other objects are laid out and interconnected to one another. The engineer would then typically create the HMI displays according to the P&ID by manually placing and arranging objects linked to various devices and instruments within the HMI displays, which can be a very time consuming and tedious process.

The techniques described herein greatly facilitate the creation of HMI displays by enabling an engineer to extract objects from a P&ID and then automatically generate those objects on an HMI display and position them according to their relative positions within the P&ID. In at least one implementation, a software tool is provided for automatically mapping instruments and devices onto user-defined HMI displays using P&ID files. The tool allows an engineer to define a specific area within a P&ID to specify an HMI display, which then determines the relative position data of the objects appearing within the user-defined area which are identified by their tag references, and then places them onto an HMI display according to their relative positions within the area defined by the user. In some implementations, the application may use optical character recognition to identify the objects in the P&ID by discovering their tag references and comparing those tags to the ones specified in an associated equipment list. Once the objects are identified, the application retrieves their location data relative to the user-defined area, and uses this location data to map these objects onto HMI displays in the correct position and orientation, without requiring any manual intervention from the user.

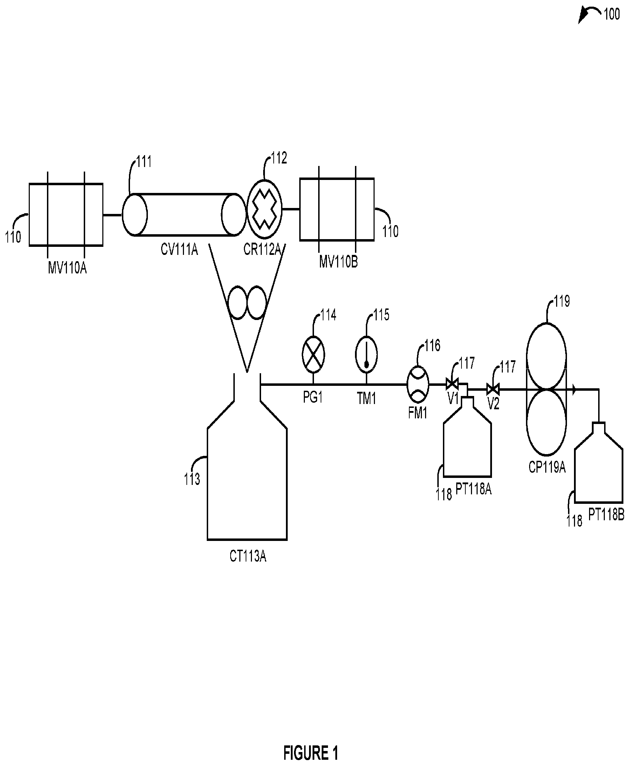

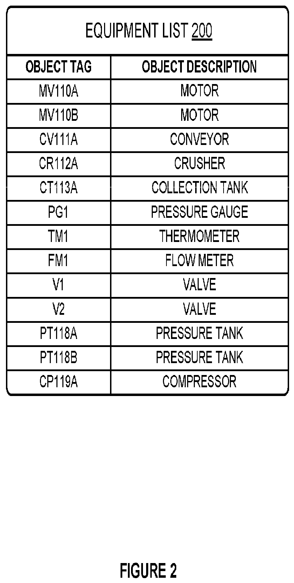

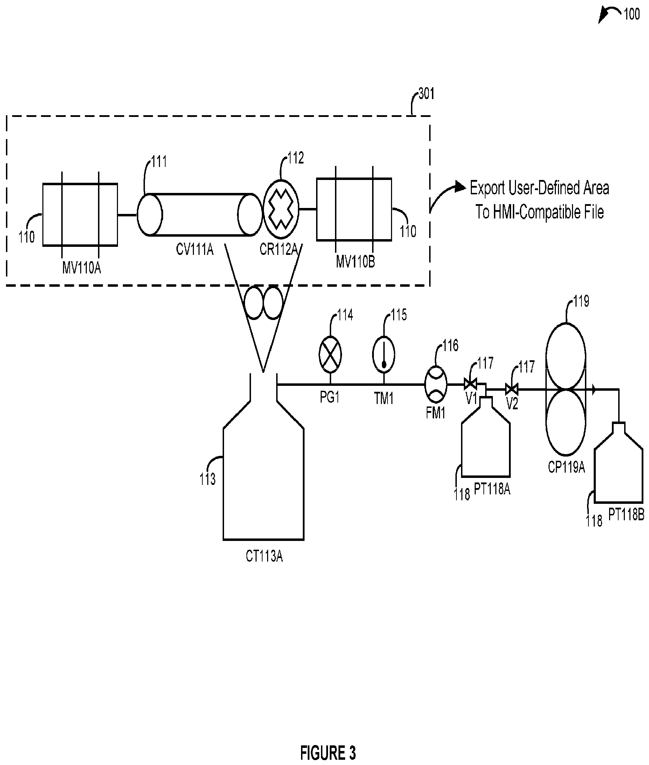

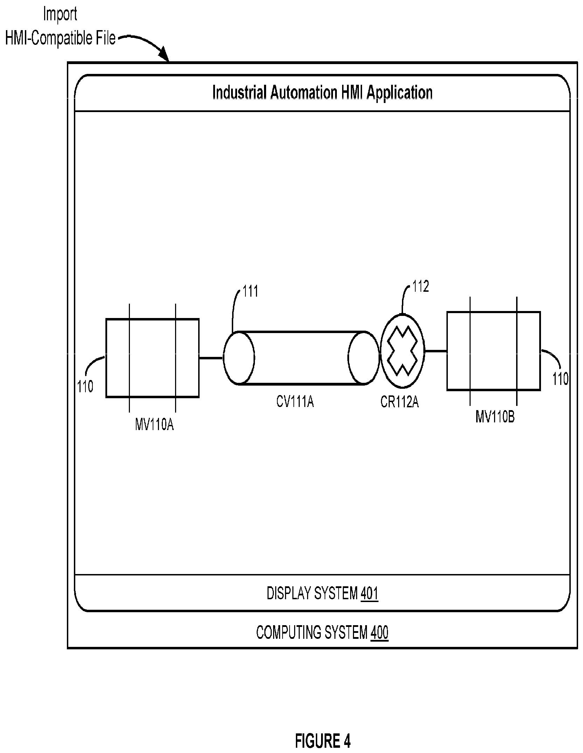

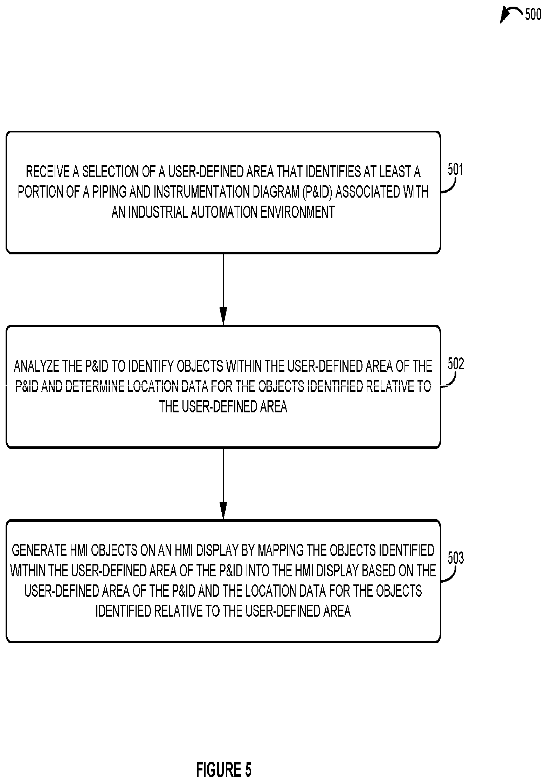

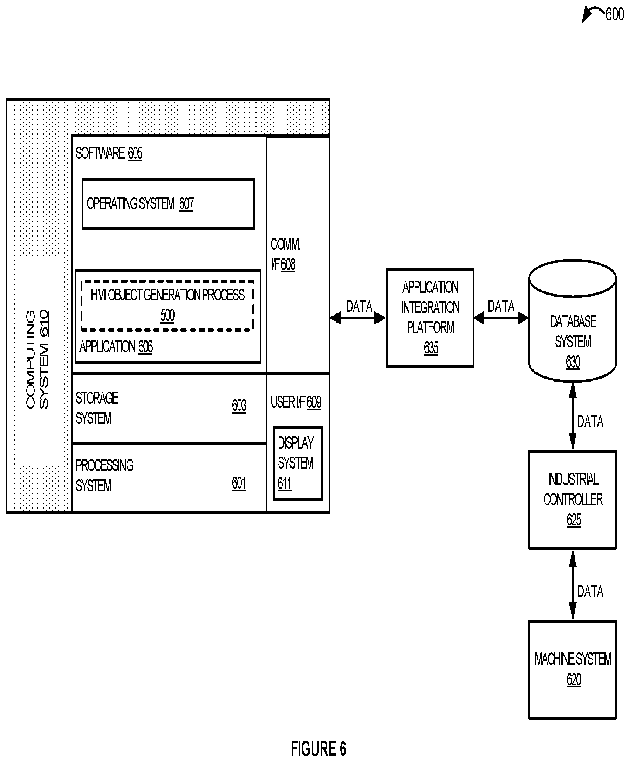

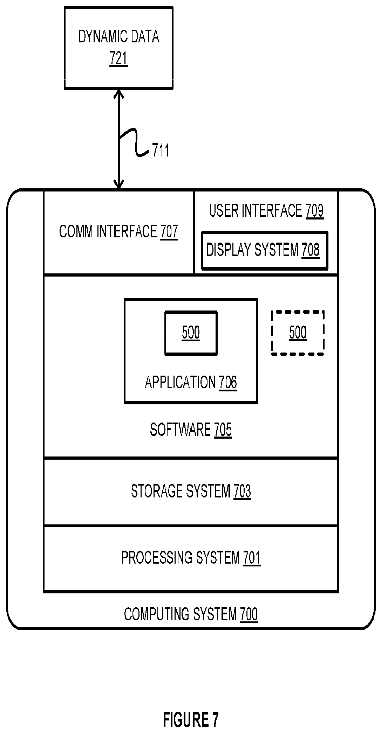

Referring now to the drawings, Figure 1 illustrates an exemplary P&ID associated with an industrial automation environment, while Figure 2 illustrates an exemplary equipment list associated with the industrial automation environment. Figure 3 is a block diagram that illustrates a user-defined area selected on the P&ID, while Figure 4 is a block diagram that illustrates an exemplary graphical display of an HMI executing on a computing system in an exemplary implementation. Figure 5 is a flow diagram that illustrates an operation of a computing system to facilitate automatic importation and placement of display objects on HMI displays in an exemplary embodiment. Figure 6 illustrates an exemplary industrial automation environment that includes a computing system that may be used to execute an HMI object generation process, and Figure 7 illustrates an exemplary computing system that may be used to perform any of the HMI object generation processes and operational scenarios described herein.

Turning now to Figure 1, a piping and instrumentation diagram (P&ID) of industrial automation environment 100 is illustrated in an exemplary embodiment. Industrial automation environment 100 provides an example of an industrial automation environment that may utilize any of the techniques disclosed herein, but note that the present disclosure could equally apply to any other industrial application. In this example, industrial automation environment 100 comprises a mineral processing facility. Industrial automation environment 100 includes motors 110, conveyor 111, crusher 112, collection tank 113, pressure gauge 114, thermometer 115, flow meter 116, valves 117, pressure tanks 118, and compressor 119.

The techniques described below with respect to Figures 1-4 could be executed by a computing system, such as computing system 700, and could be combined with operation 500 of Figure 5 in some implementations. In this example, each of the industrial objects appearing in the P&ID of industrial automation environment 100 is labeled with a tag name. These tags provide a reference to help uniquely identify each of the objects. In this example, the motors 110 arc shown as having corresponding tags MV110A and MV110B, respectively, conveyor 111 has tag CV111A, crusher 112 has tag CR112A, collection tank 113 has tag CT113A, pressure gauge 114 has tag PG1, thermometer 115 has tag TM1, and flow meter 116 has tag FM1. In addition, the valves 117 have respective tags V1 and V2, the pressure tanks 118 have respective tags PT118A and PT118B, and compressor 119 has tag CP119A.

In some implementations, the P&ID file could comprise an image file that does not contain any searchable text, such as an image-based portable document format (PDF) file. In this case, optical character recognition could be run on the P&ID file to determine the text characters of the object tags, which helps facilitate discovery of the associated objects. For example, once the tag references in the P&ID are expressed in a searchable text-based format, the tags can be compared to the object tags in a corresponding equipment list in order to help identify the various objects. An exemplary equipment list that may be used to search for or reference specific pieces of equipment found in the P&ID will now be discussed with respect to Figure 2.

Figure 2 illustrates an equipment list 200 associated with industrial automation environment 100 in an exemplary implementation. Equipment list 200 corresponds to the P&ID of industrial automation environment 100 shown in Figure 1. In this example, equipment list 200 is provided as a table which associates object tags and object descriptions. Note that an equipment list may include additional information, such as an object's type, model number, and other data, but only the object tags and descriptions are shown in equipment list 200 for clarity. By searching for the object tag references, the system can utilize the equipment list 200 to scan through the P&ID and discover all of the objects listed in the equipment list 200. In this manner, the identity and location of all of the objects in P&ID can be determined by searching through the P&ID and referencing the object tags in the equipment list 200. Once all of the objects are located and identified, the user can define an area on the P&ID for use in generating an HMI display, and the objects within the user-defined area may be extracted and imported into an HMI application and positioned according to their relative locations within the user-defined area. An exemplary P&ID in which a user has defined a specific area for generating an HMI display will now be discussed with respect to Figure 3.

Turning now to Figure 3, the P&ID of industrial automation environment 100 is once again illustrated. However, in this example, a user has defined an area 301 on the P&ID to indicate the objects that the user wants to include in an HMI display. Specifically, to define the area 301, the user has drawn a box around the motors 110, the conveyor 111, and the crusher 112, as shown by the dashed line in Figure 3. According to which objects 110-112 are found by their tags within the user-defined area 301, the tool creates corresponding HMI objects for a new HMI display screen and places them according to their relative positions within the user-defined area 301. In some implementations, the tool exports the user-defined area 301 to an HMI-compatible file, such as an extensible markup language (XML) file that may be imported by the HMI application. The HMI-compatible file would include all of the objects 110-112 within the user-defined area 301, along with their relative positions within the user-defined area 301. The HMI software could then import this file and automatically generate a corresponding HMI display. An exemplary HMI application display screen that may be generated by importing the HMI-compatible file produced from the user-defined area 301 of the P&ID will now be discussed with respect to Figure 4.

Figure 4 is a block diagram that illustrates an exemplary graphical display of an HMI application executing on a computing system 400 in an exemplary implementation. In some examples, the HMI application could comprise a FactoryTalk® View Studio application provided by Rockwell Automation, Inc. In this example, computing system 400 includes display system 401 which displays an HMI display screen. The HMI display shown on display system 401 was automatically generated by importing the HMI-compatible file produced by a user selecting an area 301 on the P&ID to specify this particular HMI display as discussed above with respect to Figure 3. The HMI display includes motors 110, conveyor 111, and crusher 112, which are all positioned within the HMI display according to their relative positions within the user-defined area 301. For example, when determining where to position the objects 110-112, the tool could determine the relative position of each of the objects from the boarders or edge boundaries of the user-defined area 301, and also the relative position of each of the objects 110-112 with respect to the other objects 110-112 appearing within the user-defined area 301. In at least one implementation, this position information could be defined as percentages along horizontal and vertical axes within the user-defined area 301, thereby providing a direct mapping of the objects' locations for placement within the HMI display. Further, in some implementations, the system could utilize the position information to scale the HMI display size up or down to accommodate larger or smaller display screens or resolutions. An exemplary operation to facilitate automatic importation and placement of display objects on HMI displays will now be described in greater detail with respect to Figure 5.

Figure 5 is a flow diagram that illustrates an operation 500 of a computing system in an exemplary implementation. The operation 500 shown in Figure 5 may also be referred to as HMI object generation process 500 herein. The steps of the operation are indicated below parenthetically.

Operation 500 may be employed to operate a computing system to facilitate automatic importation and placement of display objects on HMI displays. As shown in the operational flow of process 500, a selection of a user-defined area is received that identifies at least a portion of a piping and instrumentation diagram (P&ID) associated with an industrial automation environment (501). The P&ID provides a graphical representation of various industrial objects and their involvement in a process flow within the industrial automation environment, such as machines and other mechanical equipment and devices, process pipelines and flow directions, process control and status monitoring instrumentation, and any other objects employed in an industrial automation process. The P&ID may also include tag references that uniquely label each of the industrial objects appearing in the P&ID. In at least one implementation, prior to receiving the selection, the entire P&ID may be processed using optical character recognition to identify all of the tags associated with the objects. All of the objects within the P&ID may then be identified by referring to an equipment list that specifies the tags associated with each of these objects. In some implementations, the tags could also be imported from an application code manager. In this manner, all of the objects within the P&ID can be searched for, located, and identified by their associated tags.

In some implementations, the user could provide the selection of the user-defined area on the P&ID by drawing a box or some other boarder around at least a portion of the P&ID. The selection of the user-defined area provides an indication of an HMI display that the user desires to generate. In at least one implementation, the user may select an entire P&ID screen as the user-defined area that should be used for generating an HMI display. The selection of the user-defined area could comprise any shape and could include one or more objects appearing in the P&ID.

The P&ID is analyzed to identify objects within the user-defined area of the P&ID and determine location data for the objects identified relative to the user-defined area (502). In some implementations, the objects within the user-defined area of the P&ID may be identified by referencing their associated tags as described above. For example, the P&ID could be analyzed to identify the objects within the user-defined area of the P&ID by performing optical character recognition on text appearing in the P&ID to identify tag names associated with the objects. Further, the user-defined area of the P&ID could be analyzed to identify the objects within the user-defined area of the P&ID by comparing object tags identified in an equipment list to the tag names associated with the objects to identify the objects within the user-defined area of the P&ID. Other techniques to identify the objects within the user-defined area of the P&ID are possible, such as by identifying the objects by their shapes, closed contours, proximity or relationship to other known objects, or any other identification methods.

Once the objects within the user-defined area are identified, the P&ID is analyzed to determine the location data for the objects identified relative to the user-defined area. The location data for the objects could be determined in many ways, but generally provides the relative positions of all of the objects within the user-defined area of the P&ID. In some implementations, the P&ID could be analyzed to determine the location data for the each of the objects identified relative to each other within the user-defined area, relative to edge boundaries or boarders of the user-defined area, and/or relative to any other frame of reference within the user-defined area of the P&ID, including combinations thereof. In at least one implementation, this location data could be defined as percentages along horizontal and vertical axes within the user-defined area, thereby providing a direct mapping of the objects' locations for placement within an HMI display. For example, if an object is located at a distance of twenty percent of the user-defined area away from the left edge and fifty percent of the user-defined area away from the top edge, these percentages could be used to define the relative location data of the object that may be used for positioning the object within the HMI display. Further, in some implementations, the system could utilize the position information to scale the HMI display size up or down to accommodate larger or smaller display screens or resolutions.

HMI objects are generated on an HMI display by mapping the objects identified within the user-defined area of the P&ID onto the HMI display based on the user-defined area of the P&ID and the location data for the objects identified relative to the user-defined area (503). As discussed above, the location data may describe the positions of the objects relative to each of the other objects, relative to the edge boundaries or boarders of the user-defined area, as distances away from the edges expressed as percentages of the user-defined area, or any other relative positioning information. This location data may then be used to position the HMI objects within the HMI display according to the relative positions of their corresponding objects identified within the user-defined area. For example, in at least one implementation, the application may use the location data for the objects identified relative to the user-defined area to map the objects onto the HMI display based on the user-defined area. In some implementations, to generate the HMI objects on the HMI display, an application code manager may generate the HMI objects on the HMI display based on the user-defined area of the P&ID and the location data for the objects identified relative to the user-defined area. In at least one implementation, the HMI objects may be generated on the HMI display by generating extensible markup language (XML) data that identifies the mapping of the objects identified within the user-defined area of the P&ID onto the HMI display based on the user-defined area of the P&ID and the location data for the objects identified relative to the user-defined area. This XML data may then be processed by an HMI application to generate an HMI display with the HMI objects positioned according to the location data for the corresponding objects of the P&ID defined in the XML data.

Advantageously, a user can define an area on a P&ID file for use in automatically generating an HMI display from the P&ID information. Any industrial objects within the user-defined area can be identfied and positioned in the HMI display relative to their locations within the user-defined area of the P&ID. By enabling an engineer to extract objects from a P&ID and then automatically generate those objects on an HMI display and mapping them according to their relative positions within the P&ID, the techniques described herein greatly facilitate the creation of HMI displays. In this manner, engineers and other users can more rapidly develop and deploy HMI displays for monitoring and controlling industrial operations, without having to manually place and arrange the objects within the HMI display, saving valuable work time.

Turning now to Figure 6, a block diagram that illustrates an industrial automation environment 600 in an exemplary implementation is shown. Industrial automation environment 600 provides an example of an industrial automation environment that may be utilized to implement the predictive maintenance processes disclosed herein, but other environments could also be used. Industrial automation environment 600 includes computing system 610, machine system 620, industrial controller 625, database system 630, and application integration platform 635. Computing system 610 provides an example of a computing system that may be used to execute HMI object generation process 500 or variations thereof, although other possible computing systems could use alternative configurations. Machine system 620 and controller 625 are in communication over a communication link, controller 625 and database system 630 communicate over a communication link, database system 630 and application integration platform 635 communicate over a communication link, and application integration platform 635 and computing system 610 are in communication over a communication link. Note that there would typically be many more machine systems in most industrial automation environments, but the number of machine systems shown in Figure 6 has been restricted for clarity.

Industrial automation environment 600 comprises an industrial mining operation, automobile manufacturing factory, food processing plant, oil drilling operation, microprocessor fabrication facility, or some other type of industrial enterprise. Machine system 620 could comprise a sensor, drive, pump, filter, drill, motor, robot, fabrication machinery, mill, printer, or any other industrial automation equipment, including their associated control systems. A control system comprises, for example, industrial controller 625, which could include automation controllers, programmable logic controllers (PLCs), programmable automation controllers (PACs), or any other controllers used in automation control. Additionally, machine system 620 could comprise other industrial equipment, such as a brew kettle in a brewery, a reserve of coal or other resources, or any other element that may reside in an industrial automation environment 600.

Machine system 620 continually produces operational data over time. The operational data indicates the current status of machine system 620, such as parameters, pressure, temperature, speed, energy usage, operational equipment effectiveness (OEE), mean time between failure (MTBF), mean time to repair (MTTR), voltage, throughput volumes, times, tank levels, or any other performance status metrics. The operational data may comprise dynamic charts or trends, real-time video, or some other graphical content. Machine system 620 and/or controller 625 is capable of transferring the operational data over a communication link to database system 630, application integration platform 635, and computing system 610, typically via a communication network. Database system 630 could comprise a disk, tape, integrated circuit, server, or some other memory device. Database system 630 may reside in a single device or may be distributed among multiple memory devices.

Application integration platform 635 comprises a processing system and a communication transceiver. Application integration platform 635 may also include other components such as a router, server, data storage system, and power supply. Application integration platform 635 may reside in a single device or may be distributed across multiple devices. Application integration platform 635 may be a discrete system or may be integrated within other systems, including other systems within industrial automation environment 600. In some examples, application integration platform 635 could comprise a FactoryTalk® VantagePoint server system provided by Rockwell Automation, Inc.

The communication links over which data is exchanged between machine system 620, industrial controller 625, database system 630, application integration platform 635, and communication interface 608 of computing system 610 could use metal, air, space, optical fiber such as glass or plastic, or some other material as the transport medium, including combinations thereof. The communication links could comprise multiple network elements such as routers, gateways, telecommunication switches, servers, processing systems, or other communication equipment and systems for providing communication and data services. These communication links could use various communication protocols, such as TDM, IP, Ethernet, telephony, optical networking, packet networks, cellular networks, wireless mesh networks (WMN), local area networks (LAN), metropolitan area networks (MAN), wide area networks (WAN), hybrid fiber coax (HFC), communication signaling, wireless protocols, communication signaling, peer-to-peer networking over Bluetooth, Bluetooth low energy, Wi-Fi Direct, near field communication (NFC), or some other communication format, including combinations thereof. The communication links could be direct links or may include intermediate networks, systems, or devices.

Computing system 610 may be representative of any computing apparatus, system, or systems on which the HMI object generation process 500 disclosed herein or variations thereof may be suitably implemented. In some examples, computing system 610 could execute an HMI application for developing HMI displays, such as a FactoryTalk® View Studio application provided by Rockwell Automation, Inc. Computing system 610 provides an example of a computing system that could be used as a either a server or a client device in some implementations, although such devices could have alternative configurations. Examples of computing system 610 include mobile computing devices, such as cell phones, tablet computers, laptop computers, notebook computers, and gaming devices, as well as any other type of mobile computing devices and any combination or variation thereof. Examples of computing system 610 also include desktop computers, server computers, and virtual machines, as well as any other type of computing system, variation, or combination thereof. In some implementations, computing system 610 could comprise a mobile device capable of operating in a server-like fashion which, among other uses, could be utilized in a wireless mesh network.

Computing system 610 includes processing system 601, storage system 603, software 605, communication interface 608, and user interface 609. Processing system 601 is operatively coupled with storage system 603, communication interface 608, and user interface 609. Processing system 601 loads and executes software 605 from storage system 603. Software 605 includes application 606 and operating system 607. Application 606 may include HMI object generation process 500 in some examples. When executed by computing system 610 in general, and processing system 601 in particular, software 605 directs computing system 610 to operate as described herein for HMI object generation process 500 or variations thereof. In this example, user interface 609 includes display system 611, which itself may be part of a touch screen that also accepts user inputs via touches on its surface. Computing system 610 may optionally include additional devices, features, or functionality not discussed here for purposes of brevity.

Turning now to Figure 7, a block diagram is shown that illustrates computing system 700 in an exemplary implementation. Computing system 700 provides an example of any computing system that may be used to execute HMI object generation process 500 or variations thereof, although other possible computing systems could use alternative configurations. Computing system 700 includes processing system 701, storage system 703, software 705, communication interface 707, and user interface 709. User interface 709 comprises display system 708. Software 705 includes application 706 which itself includes HMI object generation process 500. HMI object generation process 500 may optionally be implemented separately from application 706, as indicated by the dashed line in Figure 7.

Computing system 700 may be representative of any computing apparatus, system, or systems on which application 706 and HMI object generation process 500 or variations thereof may be suitably implemented. Examples of computing system 700 include mobile computing devices, such as cell phones, tablet computers, laptop computers, notebook computers, and gaming devices, as well as any other type of mobile computing devices and any combination or variation thereof. Note that the features and functionality of computing system 700 may apply as well to desktop computers, server computers, and virtual machines, as well as any other type of computing system, variation, or combination thereof.

Computing system 700 includes processing system 701, storage system 703, software 705, communication interface 707, and user interface 709. Processing system 701 is operatively coupled with storage system 703, communication interface 707, and user interface 709. Processing system 701 loads and executes software 705 from storage system 703. When executed by computing system 700 in general, and processing system 701 in particular, software 705 directs computing system 700 to operate as described herein for HMI object generation process 500 or variations thereof. Computing system 700 may optionally include additional devices, features, or functionality not discussed herein for purposes of brevity.

Referring still to Figure 7, processing system 701 may comprise a microprocessor and other circuitry that retrieves and executes software 705 from storage system 703. Processing system 701 may be implemented within a single processing device but may also be distributed across multiple processing devices or sub-systems that cooperate in executing program instructions. Examples of processing system 701 include general purpose central processing units, application specific processors, and logic devices, as well as any other type of processing device, combinations, or variations thereof.

Storage system 703 may comprise any computer-readable storage media capable of storing software 705 and readable by processing system 701. Storage system 703 may include volatile and nonvolatile, removable and non-removable media implemented in any method or technology for storage of information, such as computer readable instructions, data structures, program modules, or other data. Storage system 703 may be implemented as a single storage device but may also be implemented across multiple storage devices or sub-systems co-located or distributed relative to each other. Storage system 703 may comprise additional elements, such as a controller, capable of communicating with processing system 701. Examples of storage media include random-access memory, read-only memory, magnetic disks, optical disks, flash memory, virtual memory and non-virtual memory, magnetic cassettes, magnetic tape, magnetic disk storage or other magnetic storage devices, or any other medium which can be used to store the desired information and that may be accessed by an instruction execution system, as well as any combination or variation thereof, or any other type of storage media. In no case is the computer-readable storage media a propagated signal.

In operation, in conjunction with user interface 709, processing system 701 may load and execute portions of software 705, such as HMI object generation process 500, to render a graphical user interface for application 706 for display by display system 708 of user interface 709. Software 705 may be implemented in program instructions and among other functions may, when executed by computing system 700 in general or processing system 701 in particular, direct computing system 700 or processing system 701 to receive a selection of a user-defined area that identifies at least a portion of a piping and instrumentation diagram (P&ID) associated with an industrial automation environment. Software 705 may further direct computing system 700 or processing system 701 to analyze the P&ID to identify objects within the user-defined area of the P&ID and determine location data for the objects identified relative to the user-defined area. In addition, software 705 directs computing system 700 or processing system 701 to generate HMI objects on an HMI display by mapping the objects identified within the user-defined area of the P&ID onto the HMI display based on the user-defined area of the P&ID and the location data for the objects identified relative to the user-defined area.

Software 705 may include additional processes, programs, or components, such as operating system software or other application software. Examples of operating systems include Windows®, iOS®, and Android®, as well as any other suitable operating system. Software 705 may also comprise firmware or some other form of machine-readable processing instructions executable by processing system 701.

In general, software 705 may, when loaded into processing system 701 and executed, transform computing system 700 overall from a general-purpose computing system into a special-purpose computing system customized to facilitate automatic importation and placement of display objects on HMI displays as described herein for each implementation. For example, encoding software 705 on storage system 703 may transform the physical structure of storage system 703. The specific transformation of the physical structure may depend on various factors in different implementations of this description. Examples of such factors may include, but are not limited to the technology used to implement the storage media of storage system 703 and whether the computer-storage media are characterized as primary or secondary storage.

In some examples, if the computer-readable storage media are implemented as semiconductor-based memory, software 705 may transform the physical state of the semiconductor memory when the program is encoded therein. For example, software 705 may transform the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate this discussion.

It should be understood that computing system 700 is generally intended to represent a computing system with which software 705 is deployed and executed in order to implement application 706 and/or HMI object generation process 500 (and variations thereof). However, computing system 700 may also represent any computing system on which software 705 may be staged and from where software 705 may be distributed, transported, downloaded, or otherwise provided to yet another computing system for deployment and execution, or yet additional distribution. For example, computing system 700 could be configured to deploy software 705 over the internet to one or more client computing systems for execution thereon, such as in a cloud-based deployment scenario.

Communication interface 707 may include communication connections and devices that allow for communication between computing system 700 and other computing systems (not shown) or services, over a communication network 711 or collection of networks. In some implementations, communication interface 707 receives dynamic data 721 over communication network 711. Examples of connections and devices that together allow for inter-system communication may include network interface cards, antennas, power amplifiers, RF circuitry, transceivers, and other communication circuitry. The aforementioned network, connections, and devices are well known and need not be discussed at length here.

User interface 709 may include a voice input device, a touch input device for receiving a gesture from a user, a motion input device for detecting non-touch gestures and other motions by a user, and other comparable input devices and associated processing elements capable of receiving user input from a user. Output devices such as display system 708, speakers, haptic devices, and other types of output devices may also be included in user interface 709. The aforementioned user input devices are well known in the art and need not be discussed at length here. User interface 709 may also include associated user interface software executable by processing system 701 in support of the various user input and output devices discussed above. Separately or in conjunction with each other and other hardware and software elements, the user interface software and devices may provide a graphical user interface, a natural user interface, or any other kind of user interface. User interface 709 may be omitted in some examples.

The functional block diagrams, operational sequences, and flow diagrams provided in the Figures are representative of exemplary architectures, environments, and methodologies for performing novel aspects of the disclosure. While, for purposes of simplicity of explanation, methods included herein may be in the form of a functional diagram, operational sequence, or flow diagram, and may be described as a series of acts, it is to be understood and appreciated that the methods are not limited by the order of acts, as some acts may, in accordance therewith, occur in a different order and/or concurrently with other acts from that shown and described herein. For example, those skilled in the art will understand and appreciate that a method could alternatively be represented as a series of interrelated states or events, such as in a state diagram. Moreover, not all acts illustrated in a methodology may be required for a novel implementation.

The above description and associated drawings teach the best mode of the invention. The following claims specify the scope of the invention. Some aspects of the best mode may not fall within the scope of the invention as specified by the claims. Also, while the preceding discussion describes embodiments employed specifically in conjunction with the monitoring and analysis of industrial processes, other applications, such as the mathematical modeling or monitoring of any man-made or naturally-existing system, may benefit from use of the concepts discussed above. Further, those skilled in the art will appreciate that the features described above can be combined in various ways to form multiple variations of the invention. As a result, the invention is not limited to the specific embodiments described above, but only by the following claims and their equivalents.

## Claims

1. A method to facilitate automatic importation and placement of display objects on human-machine interface (HMI) displays, the method comprising:
receiving a selection of a user-defined area that identifies at least a portion of a piping and instrumentation diagram (P&ID) associated with an industrial automation environment;
analyzing the P&ID to identify objects within the user-defined area of the P&ID and determine location data for the objects identified relative to the user-defined area; and
generating HMI objects on an HMI display by mapping the objects identified within the user-defined area of the P&ID onto the HMI display based on the user-defined area of the P&ID and the location data for the objects identified relative to the user-defined area.

2. The method of claim 1 wherein analyzing the P&ID to identify the objects within the user-defined area of the P&ID comprises performing optical character recognition on text appearing in the P&ID to identify tag names associated with the objects.

3. The method of claim 2 wherein analyzing the P&ID to identify the objects within the user-defined area of the P&ID comprises comparing object tags identified in an equipment list to the tag names associated with the objects to identify the objects within the user-defined area of the P&ID.

4. The method of one of claims 1 to 3 wherein analyzing the P&ID to determine the location data for the objects identified relative to the user-defined area comprises analyzing the P&ID to determine the location data for the objects identified relative to edge boundaries of the user-defined area.

5. The method of one of claims 1 to 4 wherein analyzing the P&ID to determine the location data for the objects identified relative to the user-defined area comprises analyzing the P&ID to determine the location data for each of the objects identified relative to each other within the user-defined area.

6. The method of one of claims 1 to 5 wherein generating the HMI objects on the HMI display comprises generating extensible markup language (XML) data that identifies the mapping of the objects identified within the user-defined area of the P&ID onto the HMI display based on the user-defined area of the P&ID and the location data for the objects identified relative to the user-defined area.

7. The method of one of claims 1 to 6 wherein generating the HMI objects on the HMI display comprises an application code manager generating the HMI objects on the HMI display based on the user-defined area of the P&ID and the location data for the objects identified relative to the user-defined area.

8. One or more computer-readable storage media having program instructions stored thereon to facilitate automatic importation and placement of display objects on human-machine interface (HMI) displays, wherein the program instructions, when executed by a computing system, direct the computing system to perform the method of one of claims 1 to 7.

9. An apparatus to facilitate automatic importation and placement of display objects on human-machine interface (HMI) displays, the apparatus comprising:
one or more computer-readable storage media;
a processing system operatively coupled with the one or more computer-readable storage media; and
program instructions stored on the one or more computer-readable storage media that, when executed by the processing system, direct the processing system to at least:
receive a selection of a user-defined area that identifies at least a portion of a piping and instrumentation diagram (P&ID) associated with an industrial automation environment;
analyze the P&ID to identify objects within the user-defined area of the P&ID and determine location data for the objects identified relative to the user-defined area; and
generate HMI objects on an HMI display by mapping the objects identified within the user-defined area of the P&ID onto the HMI display based on the user-defined area of the P&ID and the location data for the objects identified relative to the user-defined area.

10. The apparatus of claim 9 wherein the program instructions direct the processing system to analyze the P&ID to identify the objects within the user-defined area of the P&ID by directing the processing system to perform optical character recognition on text appearing in the P&ID to identify tag names associated with the objects.

11. The apparatus of claim 10 wherein the program instructions direct the processing system to analyze the P&ID to identify the objects within the user-defined area of the P&ID by directing the processing system to compare object tags identified in an equipment list to the tag names associated with the objects to identify the objects within the user-defined area of the P&ID.

12. The apparatus of one of claims 9 to 11 wherein the program instructions direct the processing system to analyze the P&ID to determine the location data for the objects identified relative to the user-defined area by directing the processing system to analyze the P&ID to determine the location data for the objects identified relative to edge boundaries of the user-defined area.

13. The apparatus of one of claims 9 to 12 wherein the program instructions direct the processing system to analyze the P&ID to determine the location data for the objects identified relative to the user-defined area by directing the processing system to analyze the P&ID to determine the location data for each of the objects identified relative to each other within the user-defined area.

14. The apparatus of one of claims 9 to 13 wherein the program instructions direct the processing system to generate the HMI objects on the HMI display by directing the processing system to generate extensible markup language (XML) data that identifies the mapping of the objects identified within the user-defined area of the P&ID onto the HMI display based on the user-defined area of the P&ID and the location data for the objects identified relative to the user-defined area.
